# EUROPEAN PATENT SPECIFICATION

(11) **EP 3 429 068 B1**
(45) Date of publication and mention of the grant of the patent: **23.08.2023**
(21) Application number: 17763176.9
(22) Date of filing: 06.03.2017
(51) Int. Cl.: H02K 7/06, F16H 1/28, F16H 25/22, H02K 7/116, F16C 33/58

(54) **ELECTRICAL ACTUATOR**
ELEKTRISCHER STELLANTRIEB
ACTIONNEUR ÉLECTRIQUE

(30) Priority: 11.03.2016 JP 2016048168
(43) Date of publication of application: 16.01.2019
(73) Proprietor: NTN Corporation, Osaka-shi, Osaka 550-0003 (JP)
(72) Inventor: MATSUTO, Takushi, Iwata-shi Shizuoka 438-8510 (JP); IKEDA, Yoshinori, Iwata-shi Shizuoka 438-8510 (JP); NAITOU, Yuuki, Iwata-shi Shizuoka 438-8510 (JP)
(74) Representative: Grünecker Patent- und Rechtsanwälte PartG mbB
(86) International application number: PCT/JP2017/008776
(87) International publication number: WO 2017/154836

(56) References cited:
- WO-A2-03/075434
- JP-A- 2014 018 007
- JP-A- 2015 149 799
- US-A1- 2012 024 616

## Description

### Technical Field

The present invention relates to an electric actuator.

### Background Art

In recent years, electrification of automobiles has been promoted for power saving and reduction in fuel consumption. For example, a system for operating an automatic transmission, a brake, and a steering wheel of an automobile with use of power of an electric motor (motor) has been developed and brought to the market. As an electric actuator for use in such a system, there has been known an electric actuator employing a screw mechanism as a motion conversion mechanism configured to convert a rotary motion of a motor into a linear motion to output the motion (for example, see Patent Literature 1).

The electric actuator described in Patent Literature 1 includes a planetary gear speed reducer as a speed reducer, and an output of a motor is reduced in speed by the planetary gear speed reducer, and then is transmitted to a nut member of a screw mechanism. In this case, a small-sized motor can be employed, and hence there is provided such an advantage that the entire electric actuator can be reduced in weight and size.

An electric actuator according to the preamble of independent claim 1 is disclosed in Patent Literature 2.

### Citation List

Patent Literature 1: JP 2014-231280 A
Patent Literature 2: JP 2015-149799 A

### Summary of Invention

### Technical Problem

In the electric actuator described in Patent Literature 1, the motor and the planetary gear speed reducer are arranged in series, and the nut member of the screw mechanism holds planetary gears of the planetary gear speed reducer so as to be rotatable (revolvable), and serves also as a carrier configured to extract a revolving motion of the planetary gears. In order to achieve this configuration, the nut member is fitted to end portions of support pins, which is configured to rotatably support the planetary gears, under a state in which the nut member is arranged adjacent to one side of the planetary gears in an axial direction.

However, when the above-mentioned structure is employed, a dimension of a housing configured to accommodate the motor and a motion conversion mechanism as well as a dimension of the electric actuator increase in the axial direction. Therefore, the electric actuator described in Patent Literature 1 has such a problem that the electric actuator can be applied (mounted) only to, for example, an application having room in an axial dimension of an installation space for the electric actuator.

In view of the above-mentioned actual circumstance, a main object of the present invention is to reduce the size of the electric actuator comprising the planetary gear speed reducer in the axial direction, to thereby increase mountability with respect to a device to be used.

### Solution to Problem

The present invention, solving the above object, is defined in independent claim 1. Preferred embodiments are laid down in the dependent claims.

With this configuration, such a structure that the rotor of the motor part and the nut member overlap each other in a radial direction is provided. Thus, the electric actuator can be reduced in size in the axial direction as compared with the configuration of Patent Literature 1 in which the motor, the planetary gear speed reducer, and the nut member are arrayed in the axial direction.

As a specific configuration for coupling the output member of the planetary gear speed reducer and the nut member arranged on the inner periphery of the rotor to each other so as to be capable of transmitting torque, such a configuration is employed that a cylindrical portion interposed between an inner peripheral surface of the rotor and an outer peripheral surface of the nut member is provided, that an outer peripheral surface of the cylindrical portion is opposed to the inner peripheral surface of the rotor through intermediation of a radial gap, and that an inner peripheral surface of the cylindrical portion is fixed to the outer peripheral surface of the nut member. On this occasion, when the inner peripheral surface of the cylindrical portion is fixed to the outer peripheral surface of the nut member through press-fitting, ease of assembly of the electric actuator can be improved.

The rotor of the motor part comprises: a rotor core which holds a rotor magnet; and a hollow rotary shaft, which has the rotor core mounted to an outer periphery thereof, and has the nut member arranged on an inner periphery thereof. The hollow rotary shaft is rotatably supported by rolling bearings arranged at two positions apart from each other in the axial direction. In this case, since an inner raceway surface for one of the two rolling bearings is formed on the hollow rotary shaft, the hollow rotary shaft as well as the rotor can be reduced in size in the axial direction. As a result, the electric actuator can be further reduced in size in the axial direction.

In a case in which the inner raceway surface is formed on the hollow rotary shaft, when the inner raceway surface is arranged within an axial width of the nut member, the electric actuator can be further reduced in size in the axial direction.

In the above-mentioned configuration, a thrust bearing may be arranged adjacent to the nut member on the another side in the axial direction. With this configuration, a reaction force (thrust load) acting on the nut member along with the linear motion (advance) of the screw shaft toward the one side in the axial direction can be directly supported by the thrust bearing. As a result, an action of a moment load on the screw shaft, the nut member, and the rotor of the motor part can be suppressed effectively. In particular, when the thrust bearing is arranged within a range in the axial direction between the two rolling bearings, the action of the moment load on the screw shaft and the like can be suppressed more effectively. When the moment load can be suppressed as described above, operation accuracy and durability life of the output member of the electric actuator comprising the screw shaft can be improved.

In the above-mentioned configuration, the nut member can be fitted to an outer periphery of the screw shaft through intermediation of a plurality of balls. In other words, the screw mechanism forming the motion conversion mechanism part may be a so-called ball screw mechanism. With such a configuration, operability of the output member of the electric actuator comprising the screw shaft can be improved.

The electric actuator having the above-mentioned configuration may further comprise: a housing, which comprises a plurality of members being coupled to one another in the axial direction, and is configured to accommodate the motor part and the motion conversion mechanism part; and a terminal part which is configured to hold a power supply circuit, the power supply circuit being configured to supply the power to the motor part. In this case, when the terminal part is sandwiched by the members forming the housing from both sides in the axial direction, ease of assembly of the electric actuator can be improved.

The terminal part may have, in an outer peripheral portion thereof, an opening portion for allowing a lead wire connected to the power supply circuit to be drawn out to a radially outer side of the housing. With such a configuration, for example, there can easily be achieved an electric actuator that comprises a plurality of electric actuators connected in series and each having a screw shaft, and is capable of causing the respective screw shafts to individually perform a linear motion. Such an electric actuator can be mounted to a device to be used with two or more objects to be operated, for example, can be mounted to a dual clutch transmission (DCT) being one type of automatic transmissions, thereby being capable of contributing to reduction in weight and size of a device to be used as a whole, including the electric actuator.

### Advantageous Effects of Invention

As described above, according to the present invention, an electric actuator reduced in size in the axial direction, and excellent in mountability with respect to a device to be used can be achieved.

### Brief Description of Drawings

FIG. 1 is a vertical sectional view of an electric actuator according to one embodiment of the present invention.
FIG. 2 is a sectional view as seen from a direction indicated by the arrows of the line E-E in FIG. 1.
FIG. 3 is an enlarged vertical sectional view for illustrating a rotor of a motor and a motion conversion mechanism part.
FIG. 4 is a sectional view as seen from a direction indicated by the arrows of the line F-F in FIG. 1.
FIG. 5 is a vertical sectional view for illustrating a state in which a ring gear is assembled to a casing.
FIG. 6 is an enlarged vertical sectional view for illustrating a stator of the motor and a terminal part.
FIG. 7 is a sectional view as seen from a direction indicated by the arrows of the line G-G in FIG. 1.
FIG. 8 is a sectional view as seen from a direction indicated by the arrows of the line H-H in FIG. 1.
FIG. 9 is a left side view of the electric actuator illustrated in FIG. 1.
FIG. 10 is a sectional view as seen from a direction indicated by the arrows of the line I-I in FIG 9.
FIG. 11 is a schematic block diagram for illustrating a control system for the electric actuator of FIG. 1.
FIG. 12 is a block diagram for illustrating a control system for an electric actuator according to another embodiment of the present invention.

### Description of Embodiments

Now, description is made of an embodiment of the present invention with reference to the drawings.

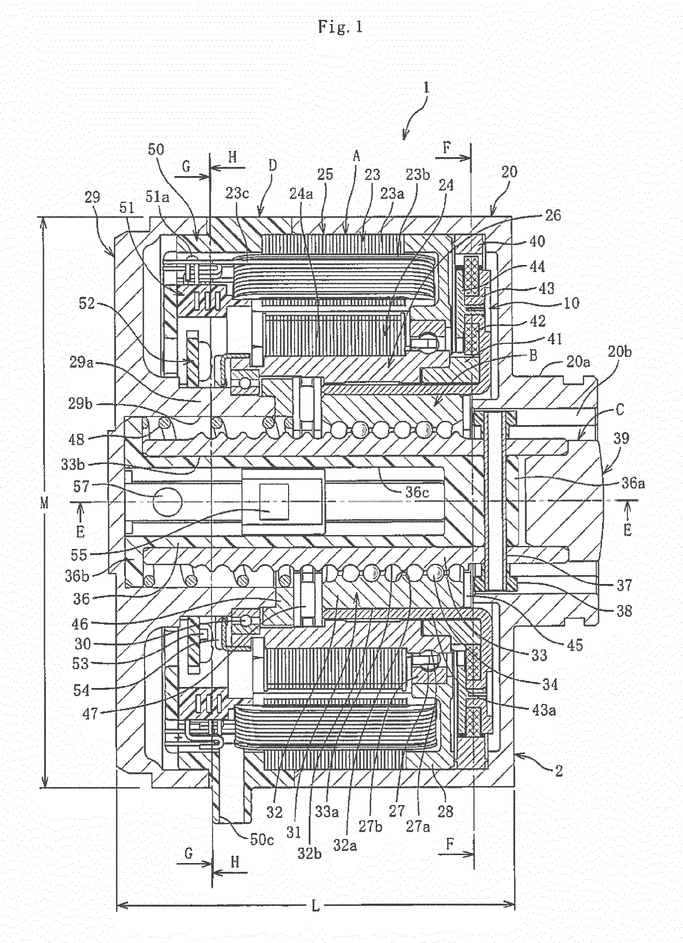

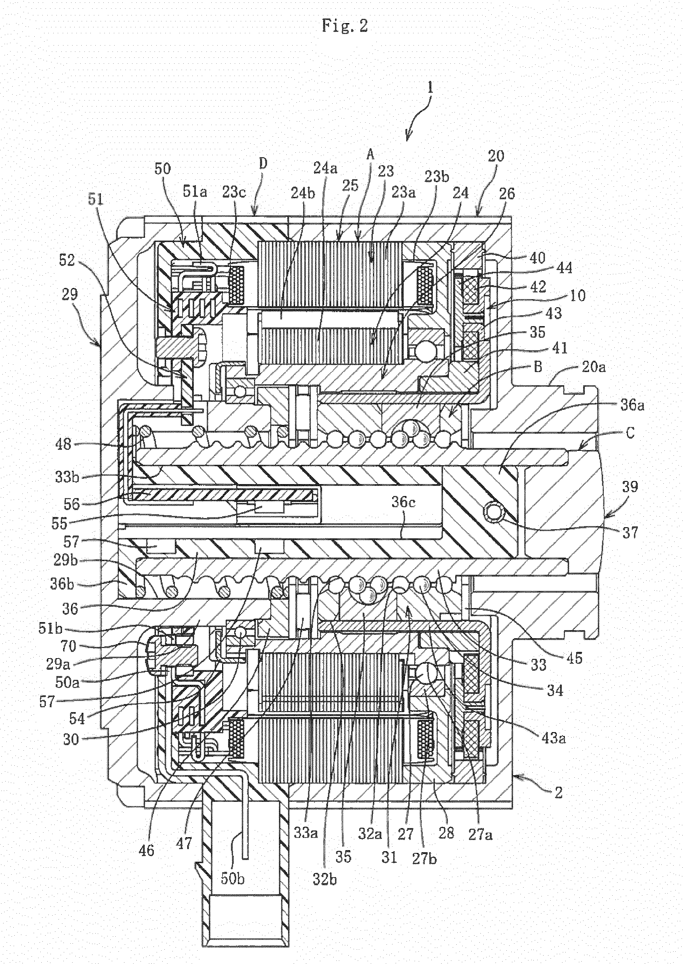

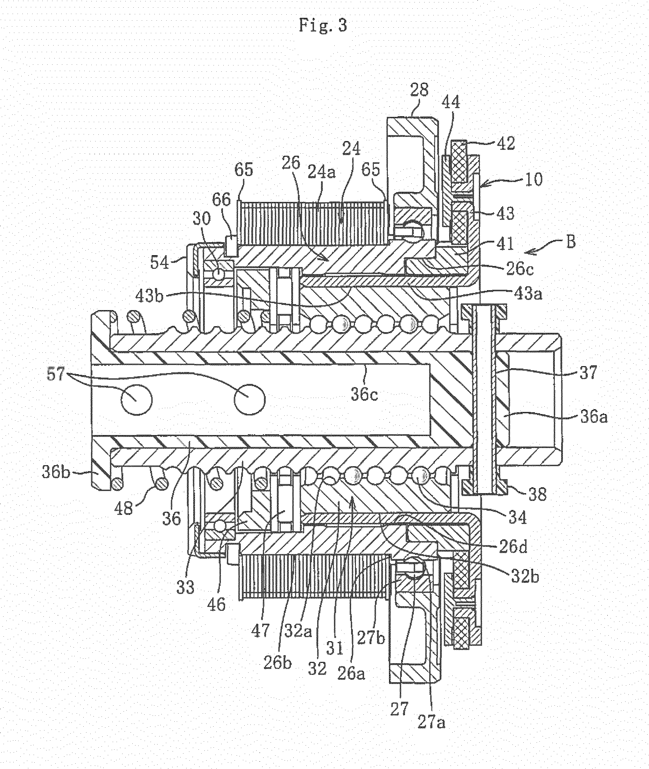

FIG. 1 is a vertical sectional view of an electric actuator according to one embodiment of the present invention. FIG. 2 is a sectional view as seen from a direction indicated by the arrows of the line E-E in FIG. 1. FIG. 3 is an enlarged vertical sectional view for illustrating a rotor of a motor part and a motion conversion mechanism part. FIG. 1 and FIG. 2 are illustrations of a state in which a screw shaft 33 that forms an output member of the electric actuator is located at an original point. The "state of being located at the original point" described in this embodiment corresponds to a state in which an end surface of (a spring mounting collar 36 coupled to) the screw shaft 33 is mechanically held in abutment against an end surface of a cover 29, which is opposed thereto, by a spring force of a compression coil spring 48 described later. As illustrated in FIG. I and FIG. 2, the electric actuator 1 comprises a motor part A, a motion conversion mechanism part B, an operation part C, and a terminal part D, which are accommodated and held in a housing 2. The motor part A is driven upon receiving supply of power. The motion conversion mechanism part B is configured to convert a rotary motion of the motor part A into a linear motion and output the linear motion. The operation part C is configured to operate an object to be operated (not shown).

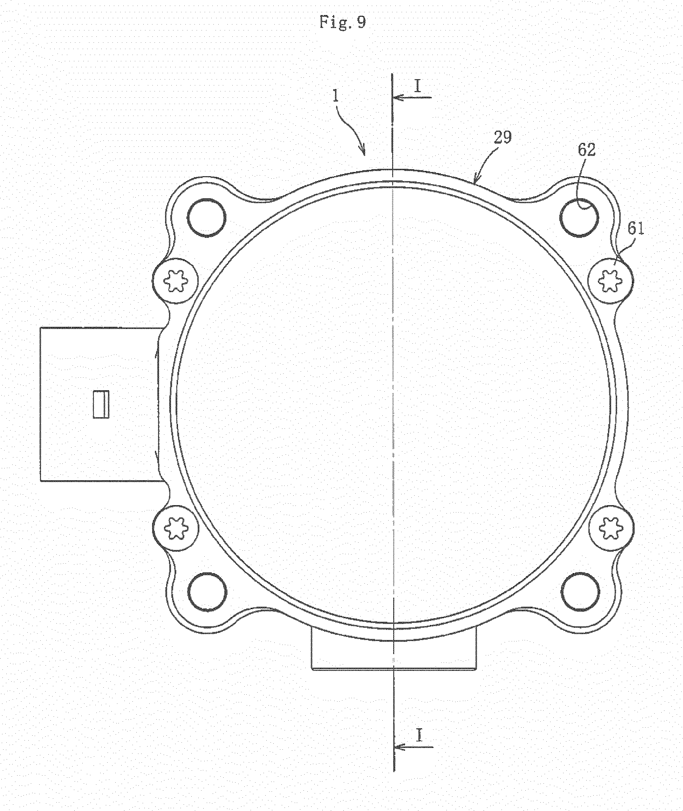

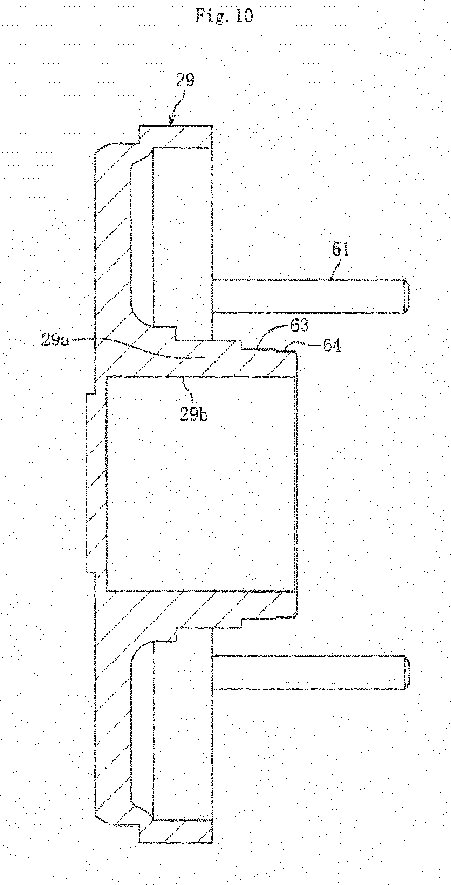

The housing 2 comprises a plurality of members coupled to one another in the axial direction. The housing 2 in this embodiment is formed of a coupled body comprising a tubular casing 20, the cover 29, and a terminal main body 50. The casing 20 has an end portion on one side in the axial direction (right side of the drawing sheet in FIG. 1 and FIG. 2, which similarly applies to the following description) and an end portion on another side in the axial direction (left side of the drawing sheet in FIG. 1 and FIG. 2, which similarly applies to the following description), which are opened. The cover 29 is configured to close an opening in the end portion of the casing 20 on the another side in the axial direction. The terminal main body 50 is arranged between the casing 20 and the cover 29, and forms the terminal part D. The cover 29 and the terminal main body 50 are mounted and fixed to the casing 20 by assembly bolts 61 illustrated in FIG. 9 and FIG. 10.

The motor part A is formed of a motor 25 of a radial gap type (specifically, a three-phase brushless motor having a U-phase, a V-phase, and a W-phase) comprising a stator 23 fixed to the casing 20 and a rotor 24 arranged so as to be opposed to an inner periphery of the stator 23 through a radial gap. The stator 23 comprises a bobbin 23b and a coil 23c. The bobbin 23b for insulation is mounted to the stator core 23a. The coil 23c is wound around the bobbin 23b. The rotor 24 comprises a rotor core 24a, a permanent magnet 24b being a rotor magnet mounted to an outer periphery of the rotor core 24a, and a hollow shaft-shaped rotor inner 26 being a hollow rotary shaft having the rotor core 24a mounted to an outer periphery thereof.

As illustrated in FIG. 3, after a side plate 65 is set on a shoulder portion 26a of the rotor inner 26 on the one side in the axial direction, the rotor core 24a is fitted to an outer peripheral surface 26b of the rotor inner 26. After the permanent magnet 24b (see FIG. 2) is fitted to the outer periphery of the rotor core 24a, the permanent magnet 24b is positioned and fixed by the side plate 65, which is mounted to the rotor inner 26 on an outer side in the axial direction of the end portion of the rotor core 24a on the another side in the axial direction, and by a circlip 66 mounted on an outer side of the side plate 65 in the axial direction.

As illustrated in FIG. 1 to FIG. 3, on an outer periphery of the end portion of the rotor inner 26 on the one side in the axial direction, an inner raceway surface 27a of a rolling bearing 27 is formed. An outer ring 27b of the rolling bearing 27 is mounted to an inner peripheral surface of a bearing holder 28 fixed to an inner peripheral surface of the casing 20. Moreover, a rolling bearing 30 is mounted between an inner peripheral surface of the end portion of the rotor inner 26 on the another side in the axial direction and an outer peripheral surface of a cylindrical portion 29a of the cover 29. With such a configuration, the rotor inner 26 is supported so as to be rotatable with respect to the housing 2 through the rolling bearings 27 and 30.

As illustrated in FIG. 1 to FIG. 3, the motion conversion mechanism part B of this embodiment comprises a ball screw device 31 and a planetary gear speed reducer 10. The planetary gear speed reducer 10 is arranged in series with the motor part A (is arranged adjacent to the one side in the axial direction of the motor part A).

The ball screw device 31 comprises the screw shaft 33, a nut member 32, and deflectors 35. The screw shaft 33 is arranged coaxially with the rotor 24 (rotor inner 26), and serves as an output member of the electric actuator 1. The nut member 32 is rotatably fitted to an outer periphery of the screw shaft 33 through intermediation of a plurality of balls 34, and is arranged on an inner periphery of the rotor inner 26 so as to be capable of transmitting torque with the rotor inner 26. The deflectors 35 serve as circulation members. Between a spiral groove 32a formed in an inner peripheral surface of the nut member 32 and a spiral groove 33a formed in an outer peripheral surface of the screw shaft 33, the plurality of balls 34 are loaded, and the deflectors 35 are incorporated. With such a configuration, when the screw shaft 33 performs a linear motion in the axial direction along with the rotation of the nut member 32, the balls 34 circulate between the spiral grooves 32a and 33a.

The screw shaft 33 is a hollow shaft with a hole portion (in this embodiment, a through hole which is opened in end surfaces on both sides in the axial direction) 33b extending in the axial direction, and the spring mounting collar 36 is received in the hole portion 33b. The spring mounting collar 36 is made of a resin material such as PPS, and integrally comprises a circular solid portion 36a, a flange-shaped spring receiving portion 36b, and a cylinder portion 36c. The circular solid portion 36a is formed at an end portion of the spring mounting collar 36 on the one side in the axial direction. The spring receiving portion 36b is formed at an end portion of the spring mounting collar 36 on the another side in the axial direction. The cylinder portion 36c connects the circular solid portion 36a and the spring receiving portion 36b to each other.

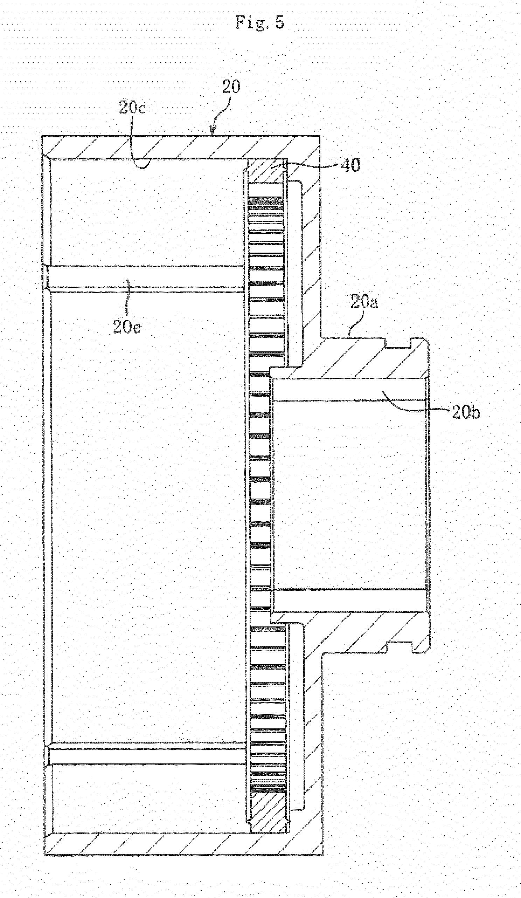

The spring mounting collar 36 received in the hole portion 33b of the screw shaft 33 is coupled and fixed to the screw shaft 33 in such a manner that a pin 37 is fitted so as to penetrate through the circular solid portion 36a and the screw shaft 33 in a radial direction. Both end portions of the pin 37 project radially outward from the outer peripheral surface of the screw shaft 33, and guide collars 38 are externally fitted to the projecting portions so as to be rotatable. The guide collars 38 are made of a resin material such as PPS, and are fitted to guide grooves 20b (also see FIG. 5). The guide grooves 20b are formed in an inner periphery of a small-diameter cylindrical portion 20a of the casing 20 and extend in the axial direction. With such a configuration, when the nut member 32 rotates about an axis of the screw shaft 33 along with rotation of the rotor 24, the screw shaft 33 performs a linear motion in the axial direction while being stopped in rotation. Whether the screw shaft 33 performs a linear motion (advances) from another side in the axial direction toward one side in the axial direction or performs a linear motion (retreats) from the one side in the axial direction toward the another side in the axial direction is basically determined in accordance with a rotation direction of the rotor 24 (nut member 32). In this embodiment, the screw shaft 33 is retreatable also by a spring force of the compression coil spring 48 (details are described later).

As illustrated in FIG 1 and FIG. 2, an actuator head 39 serving as the operation part C is removably mounted to an end portion of the screw shaft 33 on the one side in the axial direction. The actuator head 39 in this embodiment is of a so-called pressing type in which a distal end surface of the screw shaft 33 presses an object to be operated in the axial direction along with the linear motion (advance) of the screw shaft 33 toward the one side in the axial direction. As the actuator head 39, there may be employed a so-called pushing/pulling type, which can operate an object to be operated toward the both sides in the axial direction.

As illustrated in FIG. 1 to FIG. 4, the planetary gear speed reducer 10 comprises a ring gear 40, a sun gear 41, a plurality of (four in this embodiment) planetary gears 42, a planetary gear carrier 43, and planetary gear holders 44. The ring gear 40 is fixed to the casing 20. The sun gear 41 is press-fitted and fixed to an inner peripheral surface of a step portion of the rotor inner 26. The planetary gears 42 are arranged between the ring gear 40 and the sun gear 41, and mesh with both the gears 40 and 41. The planetary gear carrier 43 and the planetary gear holders 44 rotatably hold the planetary gears 42. The planetary gear carrier 43 is configured to extract a revolving motion of the planetary gears 42. Thus, the planetary gear carrier 43 forms an output member of a planetary gear speed reducer of the present invention.

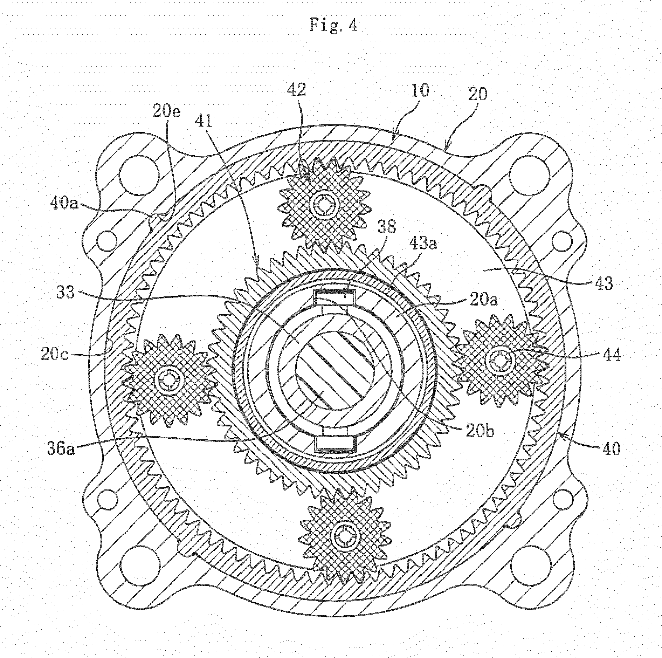

As illustrated in FIG. 4, notches 40a which project radially outward are formed on an outer periphery of the ring gear 40 at a plurality of positions (four positions in the illustrated example) apart from one another in a circumferential direction. The notches 40a are fitted to axial grooves 20e (also see FIG 5) formed in an inner peripheral surface 20c of the casing 20 at a plurality of positions (four positions in the illustrated example) apart from one another in the circumferential direction. With this configuration, the ring gear 40 is stopped in rotation with respect to the casing 20.

As illustrated in FIG. I to FIG. 3, the planetary gear carrier 43 integrally comprises pin-shaped portions, a disc-shaped portion, and a cylindrical portion 43. The pin-shaped portions are respectively fitted to inner peripheries of the planetary gears 42. The disc-shaped portion is arranged on the one side in the axial direction of the planetary gears 42. The cylindrical portion 43 extends from an end portion on a radially inner side of the disc-shaped portion toward the another side in the axial direction, and is interposed between an inner peripheral surface of the rotor inner 26 and an outer peripheral surface 32b of the nut member 32. The planetary gear carrier 43 can rotate relative to the rotor inner 26, and is coupled to the nut member 32 of the ball screw device 31 so as to be integrally rotatable (so as to be capable of transmitting torque). In this embodiment, an outer peripheral surface of a cylindrical portion 43a is opposed to the inner peripheral surface of the rotor inner 26 (and an inner peripheral surface of the sun gear 41) through a radial gap, and an inner peripheral surface of the cylindrical portion 43a is press-fitted to the outer peripheral surface 32b of the nut member 32.

With the planetary gear speed reducer 10 having the configuration described above, rotation of the rotor 24 (rotor inner 26) of the motor 25 is reduced in speed and transmitted to the nut member 32. With this action, rotation torque can be increased. Thus, the motor 25 having a small size can be employed.

As illustrated in FIG. 1 to FIG. 3, a thrust washer 45 is provided between an end surface of the nut member 32 on the one side in the axial direction and the casing 20, and a needle roller bearing 47 as a thrust bearing is provided between a thrust receiving ring 46 mounted to an outer periphery of a distal end portion of the cylindrical portion 29a of the cover 29 and an end surface of the nut member 32 on the another side in the axial direction.

As illustrated in FIG. 1 and FIG. 2, the compression coil spring 48 serving as an urging member is provided between an inner peripheral surface 29b of the cylindrical portion 29a of the cover 29 and the outer peripheral surface of the screw shaft 33. End portions of the compression coil spring 48 on the one side and the another side in the axial direction are held in abutment against the needle roller bearing 47 and the spring receiving portion 36b of the spring mounting collar 36, respectively. With a spring force of the compression coil spring 48 provided in such a manner, the screw shaft 33 coupled to the spring mounting collar 36 is always urged toward the original point side. With such a configuration, for example, when the drive power is not properly supplied to the motor part A (motor 25), the screw shaft 33 is automatically returned to an original point, thereby being capable of reducing as much as possible the risk of causing an adverse influence on the operation of the object to be operated (not shown).

Details of the cover 29 are described with reference to FIG 9 and FIG. 10. FIG. 9 is a left side view of FIG. 1. FIG. 10 is a sectional view as seen from a direction indicated by the arrows of the line 1-1 in FIG. 9. The cover 29 is made of a metal material which is excellent in ease of processing (capability of mass production) and thermal conductivity, such as an aluminum alloy, a zinc alloy, or a magnesium alloy. Although illustration is omitted, cooling fins for enhancing cooling efficiency of the electric actuator 1 may be provided on an outer surface of the cover 29. As illustrated in FIG. 10, on an outer peripheral surface of the cylindrical portion 29a of the cover 29, there are formed a bearing mounting surface 63 to which the rolling bearing 30 is mounted and a fitting surface 64 to which the thrust receiving ring 46 is fitted. Moreover, as illustrated in FIG. 9, the cover 29 has through holes (not shown) into which the assembly bolts 61 of the electric actuator 1 are inserted and through holes 62 into which mounting bolts for mounting the electric actuator 1 to a device to be used are inserted.

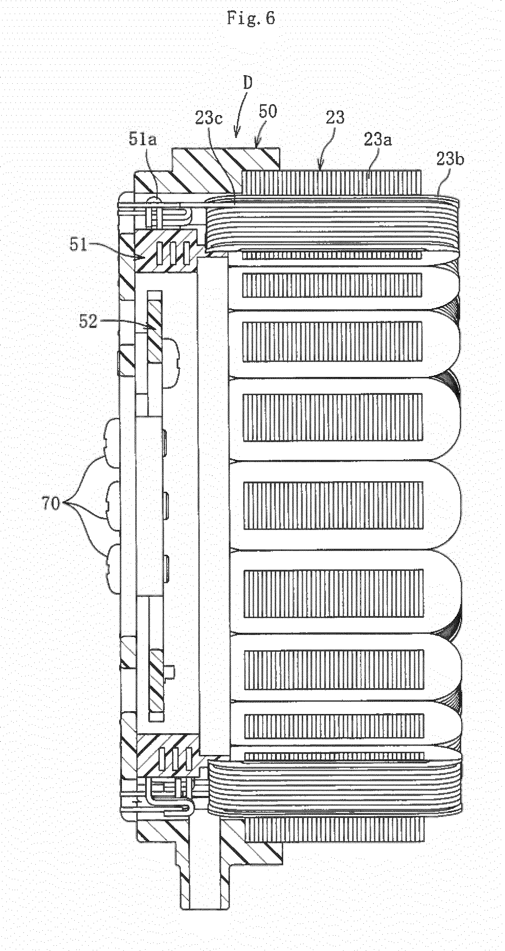

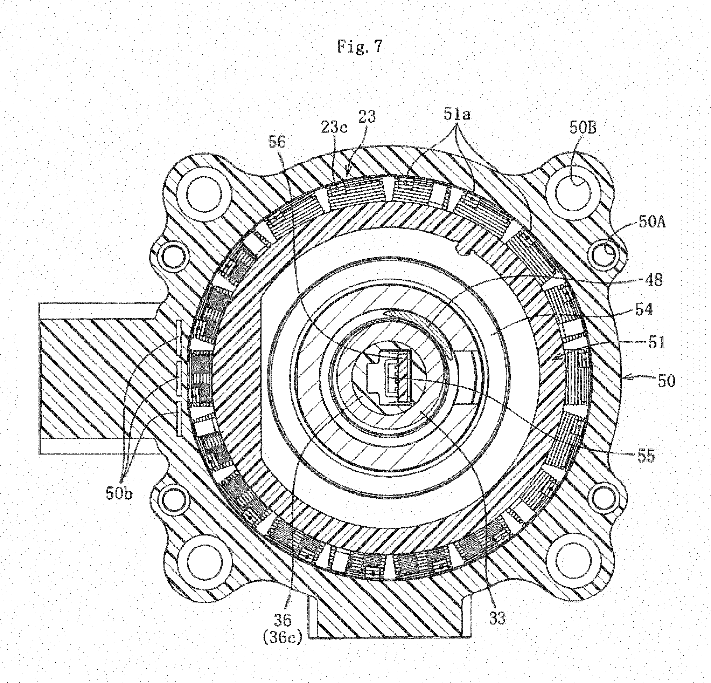

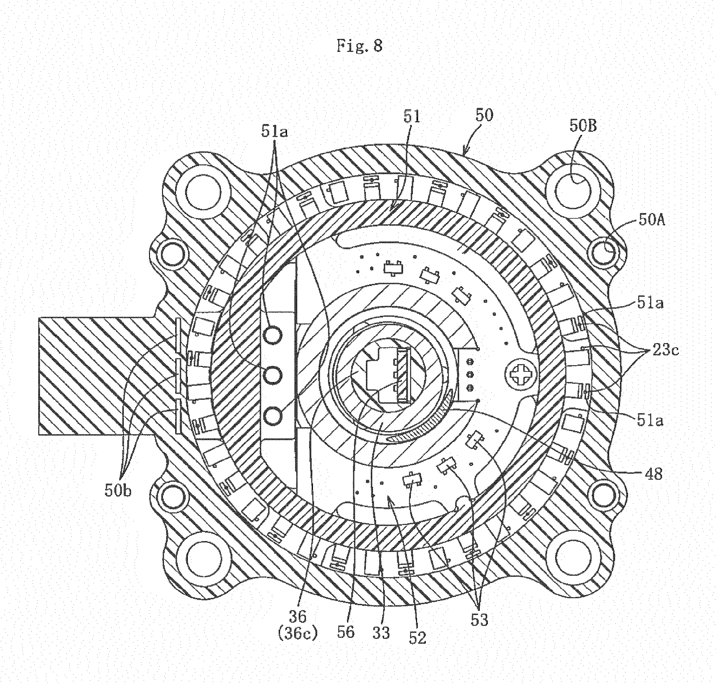

Next, with reference to FIG. 1 and FIG. 6 to FIG 8, description is made of the terminal part D. FIG. 6 is an enlarged vertical sectional view for illustrating the stator 23 of the motor 25 and the terminal part D illustrated in FIG. 1. FIG. 7 is a sectional view as seen from a direction indicated by the arrows of the line G-G in FIG. 1. FIG. 8 is a sectional view as seen from a direction indicated by the arrows of the line H-H in FIG. 1. As illustrated in FIG. 6, the terminal part D comprises a terminal main body 50, a bus bar 51, and a disc-shaped print board 52. The terminal main body 50 integrally comprises a short tubular portion and a disc-shaped portion. The short tubular portion forms a part of the housing 2. The disc-shaped portion extends radially inward from an end portion of the short tubular portion on the another side in the axial direction. The bus bar 51 and the print board 52 are fixed by screws to (the disc-shaped portion of) the terminal main body 50. As illustrated in FIG. 7 and FIG. 8, (the short tubular portion of) the terminal main body 50 has through holes 50A into which the assembly bolts 61 illustrated in FIG. 9 and FIG. 10 are inserted and through holes 50B into which bolts for mounting the electric actuator 1 to a device to be used are inserted. The terminal main body 50 is sandwiched between the casing 20 and the cover 29 by the assembly bolts 61 (see FIG. 1 and FIG. 2). The terminal main body 50 is made of a resin material such as PPS.

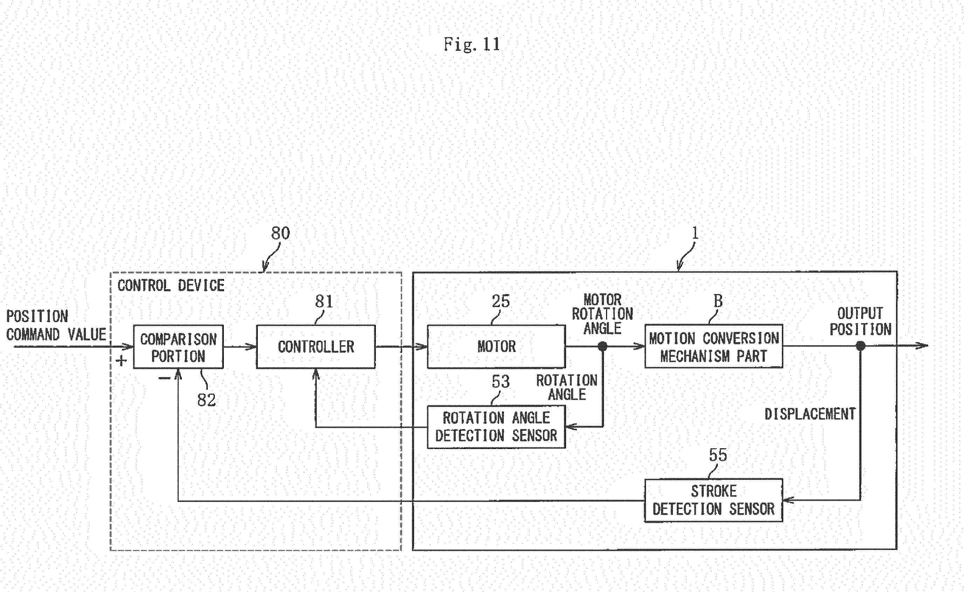

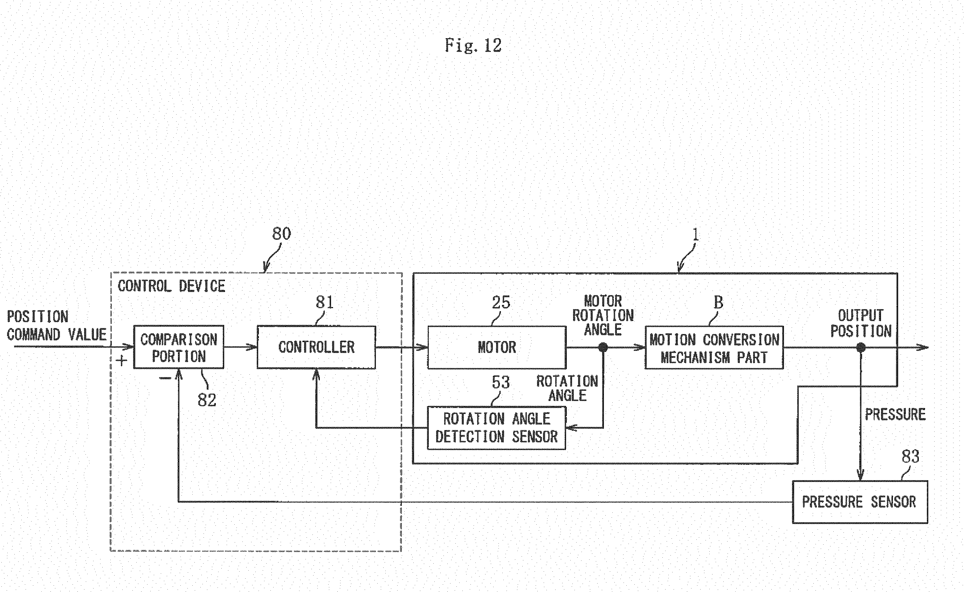

The terminal part D (terminal main body 50) holds a power supply circuit for supplying drive power to the motor 25. The power supply circuit is formed by connecting the coil 23c of the stator 23 to terminals 51a of the bus bar 51 for respective phases of a U-phase, a V-phase, and a W-phase as illustrated in FIG. 7 and FIG. 8, and fastening a terminal 51b of the bus bar 51 and a terminal base 50a of the terminal main body 50 with each other by a screw 70 as illustrated in FIG. 2. The terminal base 50a comprises a terminal 50b to which a lead line (not shown) is connected, and the lead line is drawn out to a radially outer side of the housing 2 through an opening portion 50c (see FIG. 1) formed in an outer peripheral portion (short tubular portion) of the terminal main body 50, and is connected to a controller 81 of a control device 80 (see FIG. 11 or FIG. 12).

Two types of sensors are mounted to the electric actuator I of this embodiment. Those two types of sensors are held on the terminal part D. As illustrated in, for example, FIG. 1, one of the two types of sensors is a rotation angle detection sensor 53 for use in rotation control of the motor 25, and another is a stroke detection sensor 55 for use in stroke control (detection of an amount of displacement in the axial direction) of the screw shaft 33. For each of the rotation angle detection sensor 53 and the stroke detection sensor 55, there is used a Hall sensor being one type of magnetic sensors.

As illustrated in FIG. 1 and FIG. 8, the rotation angle detection sensor 53 is mounted to the print board 52, and is arranged so as to be opposed to a pulser ring 54, which is mounted to an end portion of the rotor inner 26 on the another side in the axial direction, through an axial gap. The rotation angle detection sensor 53 is configured to determine timings of causing an electric current to flow through the U-phase, the V-phase, and the W-phase of the motor 25.

As illustrated in FIG. 2, FIG. 7, and FIG. 8, the stroke detection sensor 55 is mounted to a band-shaped print board 56. The print board 56 extends in the axial direction, and an end portion thereof on the another side in the axial direction is connected to the print board 52. The print board 56 and the stroke detection sensor 55 are arranged in an inner periphery of the hole portion 33b of the screw shaft 33, specifically, on an inner periphery of the cylinder portion 36c of the spring mounting collar 36 received in the hole portion 33b. Moreover, on the inner periphery of the cylinder portion 36c of the spring mounting collar 36, permanent magnets 57 being targets are mounted so as to be opposed to the stroke detection sensor 55 through a radial gap. In this embodiment, the permanent magnets 57 are provided at two positions apart from each other in the axial direction. The stroke detection sensor 55 formed of the Hall sensor detects a magnetic field in the axial direction and a magnetic field in the radial direction which are formed around the permanent magnets 57, and calculates the amount of displacement of the screw shaft 33 in the axial direction based on the detection of the magnetic fields.

Although detailed illustration is omitted, a signal line of the rotation angle detection sensor 53 and a signal line of the stroke detection sensor 55 are each drawn out to the radially outer side of the housing 2 through the opening portion 50c (see FIG. 1) of the terminal main body 50 and connected to the control device 80 (see FIG. 11 or FIG. 12).

A procedure of assembling the electric actuator 1 having the above-mentioned configuration is briefly described. First, as illustrated in FIG. 5, the ring gear 40 is assembled to the casing 20. Next, a subassembly comprising the rotor 24 of the motor 25 and the motion conversion mechanism part B illustrated in FIG. 3 is inserted into the casing 20. At this time, the planetary gears 42 are brought into mesh with the ring gear 40, and the guide collars 38 are fitted to the guide grooves 20b of the casing 20. Further, the bearing holder 28 is fitted to the inner peripheral surface 20c of the casing 20. After that, of the subassembly comprising the stator 23 of the motor 25 and the terminal part D (terminal main body 50) illustrated in FIG. 6, the stator 23 is fitted to the inner periphery of the casing 20, and then the cover 29 and the terminal main body 50 are fastened to the casing 20 by the assembly bolts 61 (see FIG. 9 and FIG. 10). In such a manner, the electric actuator 1 is brought into completion.

As described above, in the electric actuator 1 of this embodiment, the nut member 32 of the ball screw device 31 forming the motion conversion mechanism part B is arranged on the inner periphery of the rotor 24 (the rotor inner 26 serving as the hollow rotary shaft), and is coupled to the planetary gear carrier 43, which is the output member of the planetary gear speed reducer 10, so as to be capable of transmitting torque. With this configuration, such a structure that the rotor 24 of the motor part A and the nut member 32 overlap each other in the radial direction is provided. Thus, an axial dimension L (see FIG. 1) of the housing 2 can be reduced, in other words, the electric actuator I can be reduced in size in the axial direction as compared with the configuration of Patent Literature 1 in which the motor, the planetary gear speed reducer, and the nut member are arrayed in the axial direction. Therefore, there can be achieved the electric actuator 1 particularly excellent in mountability with respect to a device to be used, for example, a device restricted in an axial dimension of an installation space for the electric actuator 1.

Moreover, through a combination of the downsizing of the motor part A (motor 25) achieved by employing the planetary gear speed reducer 10 and the overlap structure in the radial direction of the rotor inner 26, the cylindrical portion 43a of the planetary gear carrier 43, and the nut member 32, a radial dimension M (see FIG. 1) of the housing 2 can be reduced as much as possible.

Moreover, the output member (planetary gear carrier 43) of the planetary gear speed reducer 10 and the nut member 32 are formed as the independent structures. Therefore, for example, even when the ball screw device 31 having different specifications is employed, the motor part A and the part (planetary gear speed reducer 10) of the motion conversion mechanism part B can be standardized. With this, versatility can be improved, and series production of various types of the electric actuator I with standardized components can easily be achieved.

Moreover, the end portion of the rotor inner 26 being a hollow rotary shaft on the one side in the axial direction is rotatably supported by the rolling bearing 27 arranged close to the end portion of the rotor core 24a on the one side in the axial direction, and the end portion of the rotor inner 26 on the another side in the axial direction is rotatably supported by the rolling bearing 30 arranged close to the end portion of the rotor core 24a on the another side in the axial direction. With such a structure, the rotor inner 26 can be reduced in size in the axial direction. In addition, in combination with the structure in which the rolling bearing 27 is arranged within an axial width of the nut member 32, the electric actuator 1 can be further reduced in size in the axial direction.

Further, as long as the rotation of the rotor 24 is balanced, it is only required that the rolling bearings 27 and 30 configured to support the rotor inner 26 be capable of supporting a radial load as small as the own weight of the rotor 24. In this case, it is not required that the rotor inner 26 integrally having the inner raceway surface 27a of the rolling bearing 27 be made of a material having a high strength. A required strength can be secured even when the rotor inner 26 is made of, for example, an inexpensive soft steel material for which thermal treatment such as quenching and tempering is omitted. In particular, in the electric actuator 1 of this embodiment, the rotary motion of the motor 25 is transmitted to the nut member 32 through the planetary gear speed reducer 10. Thus, the radial load is not generated. Moreover, the reaction force (thrust load) generated along with the linear motion of the screw shaft 33 is directly supported by the needle roller bearing 47. Thus, it is only required that the rolling bearing 27 have a function of positioning in the radial direction, and hence the above-mentioned material specification is sufficient for the rotor inner 26 integrally having the inner raceway surface 27a of the rolling bearing 27. With this configuration, the electric actuator 1 can be reduced in cost.

Moreover, as described above, when the needle roller bearing 47 is configured to directly support the thrust load acting on the nut member 32, the action of the moment load on the ball screw device 31 (motion conversion mechanism part B) and on the rotor 24 of the motor part A can be suppressed effectively. In particular, when the needle roller bearing 47 is arranged within the range in the axial direction between the rolling bearings 27 and 30 configured to rotatably support the rotor 24 (rotor inner 26) as in this embodiment, the effect of suppressing the moment load can be enhanced. When the moment load can be suppressed in this way, operation accuracy and durability life of the output member of the electric actuator I comprising the screw shaft 33 can be improved as well as the needle roller bearing 47 having a smaller size can be used.

The needle roller bearing 47 is arranged near a center portion in the axial direction between both of the rolling bearings 27 and 30 in this embodiment, and the effect of suppressing the moment load can thus be further enhanced in this case. Therefore, the downsizing of the needle roller bearing 47 can be further promoted. As a result, for example, the needle roller bearing 47 and the thrust receiving ring 46 having extremely small sizes can be employed. Consequently, the dimension in the axial direction of the electric actuator I can be prevented from increasing as much as possible.

Moreover, the cylindrical portion 43a interposed between the inner peripheral surface of the rotor 24 (rotor inner 26) and the outer peripheral surface 32b of the nut member 32 is formed in the planetary gear carrier 43, and the planetary gear carrier 43 and the nut member 32 are coupled to each other so as to be capable of transmitting torque through the press-fitting of the inner peripheral surface of the cylindrical portion 43a to the outer peripheral surface 32b of the nut member 32. Thus, ease of coupling operation at the time of assembly is excellent, and stable torque transmission can be performed with respect to high torque after reduction in speed.

Moreover, the rotor inner 26 and the sun gear 41 are coupled to each other so as to be capable of transmitting torque through press-fitting of the sun gear 41 of the planetary gear speed reducer 10 to the inner peripheral surface of the rotor inner 26. Also in this point, the ease of coupling operation at the time of assembly is excellent. Even when such a coupling structure is employed, the sun gear 41 is only required to rotate together with the rotor inner 26 before reduction in speed, and hence the torque transmission performance required between the sun gear 41 and the rotor inner 26 can be sufficiently secured. Further, the rotor inner 26 and the sun gear 41 are coupled to each other at a position directly below the rolling bearing 27 configured to support the rotor inner 26. Thus, the rotation accuracy of the sun gear 41 is also excellent.

Further, there is employed a sandwich structure of holding, for example, the power supply circuit, the rotation angle detection sensor 53, and the stroke detection sensor 55 with the terminal main body 50 and sandwiching the terminal main body 50 (terminal part D) between the casing 20 and the cover 29 in the axial direction. Therefore, the ease of assembly can be further enhanced. Further, with the sandwich structure described above and the structure in which the lead line of the power supply circuit and the signal line of the sensor can be drawn out to the radially outer side of the housing 2, there can be achieved an electric actuator comprising a plurality of electric actuators 1 (units each comprising the motor part A, the motion conversion mechanism part B, and the terminal part D formed into a unit) arrayed in the axial direction and being capable of individually operating a plurality of objects to be operated.

The electric actuator I according to this embodiment has the features described above. Thus, the electric actuator 1 is excellent in operation accuracy and durability life, is reduced in weight and size with excellent mountability with respect to a device to be used, and enables easy production in series at low cost.

Finally, with reference to FIG. 1 and FIG. 11, an operation mode of the electric actuator 1 of this embodiment is briefly described. For example, when an operation amount is input to an ECU provided at an upper position of the vehicle (not shown), the ECU calculates a requested position command value based on the operation amount. As illustrated in FIG. 11, the position command value is transmitted to the controller 81 of the control device 80, and the controller 81 calculates a control signal of a motor rotation angle required in accordance with the position command value, and transmits the control signal to the motor 25.

The rotor 24 rotates based on the control signal transmitted from the controller 81, and the rotary motion is transmitted to the motion conversion mechanism part B. Specifically, when the rotor 24 rotates, the sun gear 41 of the planetary gear speed reducer 10 coupled to the rotor inner 26 rotates. Along with this rotation, the planetary gears 42 revolve, and the planetary gear carrier 43 rotates. With this, the rotary motion of the rotor 24 is transmitted to the nut member 32 coupled to the planetary gear carrier 43. At this time, the revolving motion of the planetary gears 42 reduces the rotation number of the rotor 24, thereby increasing rotation torque transmitted to the nut member 32.

When the nut member 32 rotates upon receiving the rotary motion of the rotor 24, the screw shaft 33 advances while being stopped in rotation. At this time, the screw shaft 33 advances to a position based on the control signal of the controller 81, and the actuator head 39 fixed to the end portion of the screw shaft 33 on the one side in the axial direction operates (adds pressure to) an object to be operated (not shown).

An axial position (amount of displacement in the axial direction) of the screw shaft 33 is detected by the stroke detection sensor 55 as illustrated in FIG. 11, and a detection signal thereof is transmitted to a comparison portion 82 of the control device 80. Then, the comparison portion 82 calculates a difference between a detection value detected by the stroke detection sensor 55 and a position command value, and the controller 81 transmits a control signal to the motor 25 based on the calculated value and the signal transmitted from the rotation angle detection sensor 53. In such a manner, a position of the actuator head 39 is subjected to feedback control. Therefore, when the electric actuator 1 of this embodiment is applied to, for example, a shift-by-wire system, a shift position can be reliably controlled. The power for driving the motor 25 and the sensors 53 and 55 is supplied from an external power supply (not shown) such as a battery provided on the vehicle side to the motor 25 through the control device 80 and the power supply circuit held by the terminal portion D.

In the above, description is made of the electric actuator 1 according to one embodiment of the present invention. However, the present invention is not limited to the embodiment described above.

For example, in the above-mentioned embodiment, the nut member 32 is rotatably fitted to the outer periphery of the screw shaft 33 through intermediation of the plurality of balls 34 (the ball screw device 31 is employed for the motion conversion mechanism part B), but the present invention can be applied to the electric actuator employing a screw device in which the balls 34 (and the deflectors 35) are omitted for the motion conversion mechanism part B. However, in consideration of operability and the like of the screw shaft 33 (the output member of the electric actuator 1), it is preferred that the ball screw device 31 be employed for the motion conversion mechanism part B.

Further, as the thrust bearing to be arranged adjacent to the nut member 32 on another side in the axial direction, a rolling bearing other than the needle roller bearing 47, for example, a cylindrical roller bearing can be employed. However, in consideration of ability to support the thrust load and the axial dimension of the bearing, the needle roller bearing 47 is preferred.

Further, in the embodiment described above, the hole portion 33b (through hole in the axial direction) opened in both end surfaces of the screw shaft 33 in the axial direction is formed so that the screw shaft 33 has a hollow shape, and the stroke detection sensor 55 is arranged on the inner periphery of the screw shaft 33. However, by forming a hole portion 33b which is opened only in the end surface on another side in the axial direction and extends in the axial direction in the screw shaft 33, the screw shaft 33 may be formed so as to have a hollow shape.

Moreover, in the embodiment described above, the compression coil spring 48 serving as an urging member configured to always urge the screw shaft 33 to the original point side is provided. However, it is only required that the compression coil spring 48 be provided depending on the use which requires the urging function, and the compression coil spring 48 may be omitted when it is not required.

Further, in the embodiment described above, the stroke detection sensor 55 is used. However, depending on a device to be used, there is also a case in which the stroke detection sensor 55 is not used.

With reference to FIG. 12, description is made of an example operation mode of the electric actuator I in a case in which the stroke detection sensor 55 is not used. FIG. 12 is an example of pressure control, and a pressure sensor 83 is provided to an object to be operated (not shown). When an operation amount is input to an ECU (not shown), the ECU calculates a requested pressure command value. When the pressure command value is transmitted to the controller 81 of the control device 80, the controller 81 calculates a control signal of a motor rotation angle required in accordance with the pressure command value, and transmits the control signal to the motor 25. Then, similarly to the case described with reference to FIG. 11, the screw shaft 33 advances to a position based on the control signal of the controller 81, and the actuator head 39 fixed to an end portion of the screw shaft 33 on one side in the axial direction operates an object to be operated (not shown).

An operation pressure of the screw shaft 33 (actuator head 39) is detected by the pressure sensor 83 installed outside, and is subjected to feedback control. Therefore, when the electric actuator 1 which does not involve use of the stroke detection sensor 55 is applied to, for example, a brake-by-wire system, the liquid pressure of the brake can be reliably controlled.

As described above, when the stroke detection sensor 55 is not used, a solid screw shaft may be employed as the screw shaft 33, and the spring mounting collar 36 may be omitted. Even in the case in which the solid screw shaft 33 is used, when the compression coil spring 48 is interposed between the screw shaft 33 and the nut member 32, the screw shaft 33 comprising a flange portion in the end portion thereof on the another side in the axial direction may be employed.

The present invention is not limited to the above-mentioned embodiments. As a matter of course, the present invention may be carried out in various modes without departing from the scope of the present invention, which is defined in the appended claims.

### Reference Signs List

- 1: electric actuator
- 2: housing
- 10: planetary gear speed reducer
- 20: casing
- 24: rotor
- 25: motor
- 26: rotor inner (hollow rotary shaft)
- 29: cover
- 31: ball screw device
- 32: nut member
- 33: screw shaft
- 34: ball
- 40: ring gear
- 41: sun gear
- 42: planetary gear
- 43: planetary gear carrier (output member)
- 43a: cylindrical portion
- 47: needle roller bearing (thrust bearing)
- 48: compression coil spring
- 50: terminal main body
- 50c: opening portion
- A: motor part
- B: motion conversion mechanism part
- C: operation part
- D: terminal part
- L: axial dimension of housing
- M: radial dimension of housing

## Claims

1. An electric actuator (1), comprising:
a motor part (A) configured to drive upon receiving supply of power; and
a motion conversion mechanism part (B) configured to convert a rotary motion of the motor part (A) into a linear motion to output the linear motion,
wherein the motion conversion mechanism part (B) comprises:
a screw shaft (33) arranged coaxially with a rotation center of a rotor (24) of the motor part (A);
a nut member (32) rotatably fitted to an outer periphery of the screw shaft (33); and
a planetary gear speed reducer (10) configured to reduce a speed of rotation of the rotor (24) and output the rotation,
wherein the rotor (24) comprises:
a rotor core (24a) which holds a rotor magnet (24b); and
a hollow rotary shaft (26), which has the rotor core (24a) mounted to an outer periphery thereof, and has the nut member (32) arranged on an inner periphery thereof,
wherein the hollow rotary shaft (26) is rotatably supported by rolling bearings (27, 30) arranged at two positions apart from each other in the axial direction, and comprises an inner raceway surface (27a) for one of the two rolling bearings (27, 30),
wherein the screw shaft (33) is configured to advance toward one side in an axial direction or retreat toward another side in the axial direction in accordance with a rotation direction of the nut member (32), and
wherein the nut member (32) is arranged on an inner periphery of the hollow rotary shaft (26), and is coupled to an output member (43) of the planetary gear speed reducer (10) so as to be capable of transmitting torque
the electric actuator (1) being **characterized in that,**
the output member (43) comprises a cylindrical portion (43a) interposed between an inner peripheral surface of the hollow rotary shaft (26) and an outer peripheral surface (32b) of the nut member (32),
wherein the planetary gear speed reducer (10) comprises a sun gear (41) press-fitted and fixed to the inner peripheral surface of the hollow rotary shaft (26),
wherein an inner peripheral surface of the cylindrical portion (43a) is fixed to the outer peripheral surface (32b) of the nut member (32), and
wherein an outer peripheral surface of the cylindrical portion (43a) is opposed to the inner peripheral surface of the hollow rotary shaft (26), and an inner peripheral surface of the sun gear (41) through intermediation of a radial gap.

2. The electric actuator (1) according to claim 1, wherein the inner peripheral surface of the cylindrical portion (43a) is fixed to the outer peripheral surface (32b) of the nut member (32) through press-fitting.

3. The electric actuator (1) according to claim 1 or 2, wherein the inner raceway surface (27a) is arranged within an axial width of the nut member (32).

4. The electric actuator (1) according to any one of claims 1 to 3,
wherein a thrust bearing (47) is arranged adjacent to the nut member (32) on the another side in the axial direction, and
wherein the thrust bearing (47) is arranged within a range in the axial direction between the two rolling bearings (27, 30).

5. The electric actuator (1) according to any one of claims 1 to 4, wherein the nut member (32) is fitted to an outer periphery of the screw shaft (33) through intermediation of a plurality of balls (34).

6. The electric actuator (1) according to any one of claims 1 to 5, further comprising:
a housing (2), which comprises a plurality of members (20, 29, 50) being coupled to one another in the axial direction, and is configured to accommodate the motor part (A) and the motion conversion mechanism part (B); and
a terminal part (D) which is configured to hold a power supply circuit, the power supply circuit being configured to supply the power to the motor part (A),
wherein the terminal part (D) is sandwiched by the members (20, 29) forming the housing (2) from both sides in the axial direction.

7. The electric actuator (1) according to claim 6, wherein the terminal part (D) has, in an outer peripheral portion thereof, an opening portion (50c) for allowing a lead wire connected to the power supply circuit to be drawn out to a radially outer side of the housing (2).

## Patentansprüche

1. Elektrischer Aktor (1), umfassend:
einen Motorteil (A), der konfiguriert ist, bei Erhalt einer Leistungszufuhr anzutreiben; und
einen Bewegungswandlungsmechanismus-Teil (B), der konfiguriert ist, eine Drehbewegung des Motorteils (A) in eine lineare Bewegung umzuwandeln, um die lineare Bewegung auszugeben,
wobei der Bewegungswandlungsmechanismus-Teil (B) umfasst:
eine Gewindespindel (33), die koaxial zu einer Drehmitte eines Rotors (24) des Motorteils (A) angeordnet ist;
ein Mutternelement (32), das drehbar an einem Außenumfang der Gewindespindel (33) angebracht ist; und
einen Planetengetriebe-Drehzahlminderer (10), der konfiguriert ist, eine Drehzahl des Rotors (24) zu verringern und die Drehung auszugeben,
wobei der Rotor (24) umfasst:
einen Rotorkern (24a), der einen Rotormagnet (24b) hält; und
eine hohl Drehwelle (26), an deren Außenumfang der Rotorkern (24a) montiert ist, und an deren Innenumfang das Mutterelement (32) angeordnet ist,
wobei die hohle Drehwelle (26) drehbar durch Wälzlager (27, 30) gelagert wird, die an zwei Positionen angeordnet sind, die in der axialen Richtung voneinander beabstandet sind, und eine innere Lauffläche (27a) für eines der zwei Wälzlager (27, 30) umfasst,
wobei die Gewindespindel (33) konfiguriert ist, in Übereinstimmung mit einer Drehrichtung des Mutternelements (32) in Richtung einer Seite in einer axialen Richtung vorzurücken oder in Richtung einer anderen Seite in der axialen Richtung zurückzugehen, und
wobei das Mutternelement (32) an einem Innenumfang der holen Drehwelle (26) angeordnet ist und mit einem Ausgangselement (43) des Planetengetriebe-Drehzahlminderers (10) gekoppelt ist, um ein Drehmoment übertragen zu können
wobei der elektrische Aktor (1) **dadurch gekennzeichnet ist, dass**
das Ausgangselement (43) einen zylindrischen Abschnitt (43a) umfasst, der zwischen einer Innenumfangsfläche der holen Drehwelle (26) und einer Außenumfangsfläche (32b) des Mutternelements (32) angeordnet ist,
wobei der Planetengetriebe-Drehzahlminderer (10) ein Sonnenrad (41) umfasst, das an einer Innenumfangsfläche der hohlen Drehwelle (26) pressgepasst und befestigt ist,
wobei eine Innenumfangsfläche des zylindrischen Abschnitts (43a) an der Außenumfangsfläche (32b) des Mutternelements (32) befestigt ist, und
wobei eine Außenumfangsfläche des zylindrischen Abschnitts (43a) der Innenumfangsfläche der hohlen Drehwelle (26) und einer Innenumfangsfläche des Sonnenrads (41) über ein Dazwischenliegen eines radialen Spalts gegenüberliegt.

2. Der elektrische Aktor (1) nach Anspruch 1, wobei die Innenumfangsfläche des zylindrischen Abschnitts (43a) durch Presspassung an der Außenumfangsfläche (32b) des Mutternelements (32) befestigt ist.

3. Der elektrische Aktor (1) nach Anspruch 1 oder 2, wobei die innere Lauffläche (27a) innerhalb einer axialen Breite des Mutternelements (32) angeordnet ist.

4. Der elektrische Aktor (1) nach einem der Ansprüche 1 bis 3,
wobei ein Axiallager (47) benachbart zu dem Mutternelement (32) auf der anderen Seite in der axialen Richtung angeordnet ist, und
wobei das Axiallager (47) innerhalb eines Bereichs in der axialen Richtung zwischen den zwei Wälzlagern (27, 30) angeordnet ist.

5. Der elektrische Aktor (1) nach einem der Ansprüche 1 bis 4, wobei das Mutternelement (32) an einem Außenumfang der Gewindespindel (33) durch Dazwischenliegen eine Vielzahl von Kugeln (34) angebracht ist.

6. Der elektrische Aktor (1) nach einem der Ansprüche 1 bis 5, ferner umfassend:
ein Gehäuse (2), das eine Vielzahl Elemente (20, 29, 50) umfasst, die in der axialen Richtung miteinander verbunden sind, und konfiguriert ist, den Motorteil (A) und den Bewegungswandlungsmechanismus-Teil (B) aufzunehmen; und
einen Anschlussteil (D), der konfiguriert ist, eine Leistungszufuhrschaltung zu halten, wobei die Leistungszufuhrschaltung konfiguriert ist, die Leistung dem Motorteil (A) zuzuführen,
wobei der Anschlussteil (D) durch die Elemente (20, 29), die das Gehäuse (2) bilden, von beiden Seiten in der axialen Richtung eingezwängt wird.

7. Der elektrische Aktor (1) nach Anspruch 6, wobei der Anschlussteil (D) in seinem Außenumfangsabschnitt einen Öffnungsabschnitt (50c) aufweist, um zu ermöglichen, dass ein Leitungsdraht, der mit der Leistungszufuhrschaltung verbunden ist, zu einer radial äußeren Seite des Gehäuses (2) herausgezogen wird.

## Revendications

1. Actionneur électrique (1), comprenant :
une partie de moteur (A) configurée pour l'entraînement lors de la réception d'une alimentation électrique ; et
une partie de mécanisme de conversion de mouvement (B) configurée pour convertir un mouvement rotatif de la partie de moteur (A) en un mouvement linéaire pour délivrer en sortie le mouvement linéaire,
dans lequel la partie de mécanisme de conversion de mouvement (B) comprend :
un arbre devis (33) agencé coaxialement avec un centre de rotation d'un rotor (24) de la partie de moteur (A) ;
un élément d'écrou (32) ajusté en rotation à une périphérie externe de l'arbre devis (33) ; et
un réducteur de vitesse à engrenage planétaire (10) configuré pour réduire une vitesse de rotation du rotor (24) et délivrer en sortie la rotation, dans lequel le rotor (24) comprend :
un noyau de rotor (24a) qui maintient un aimant de rotor (24b) ; et
un arbre rotatif creux (26), qui a le noyau de rotor (24a) monté sur une périphérie externe de celui-ci, et a l'élément d'écrou (32) agencé sur une périphérie interne de celui-ci,
dans lequel l'arbre rotatif creux (26) est supporté en rotation par des paliers à roulement (27, 30) agencés à deux positions espacées l'une de l'autre dans la direction axiale, et comprend une surface de chemin de roulement interne (27a) pour l'un des deux paliers à roulement (27, 30),
dans lequel l'arbre de vis (33) est configuré pour avancer vers un côté dans une direction axiale ou reculer vers un autre côté dans la direction axiale conformément à une direction de rotation de l'élément d'écrou (32), et
dans lequel l'élément d'écrou (32) est agencé sur une périphérie interne de l'arbre rotatif creux (26) et est couplé à un élément de sortie (43) du réducteur de vitesse à engrenage planétaire (10) de manière à être capable de transmettre un couple
l'actionneur électrique (1) étant **caractérisé en ce que,**
l'élément de sortie (43) comprend une partie cylindrique (43a) interposée entre une surface périphérique interne de l'arbre rotatif creux (26) et une surface périphérique externe (32b) de l'élément d'écrou (32),
dans lequel le réducteur de vitesse à engrenage planétaire (10) comprend une roue solaire (41) ajustée par pression et fixée à la surface périphérique interne de l'arbre rotatif creux (26),
dans lequel une surface périphérique interne de la partie cylindrique (43a) est fixée à la surface périphérique externe (32b) de l'élément d'écrou (32), et
dans lequel une surface périphérique externe de la partie cylindrique (43a) est opposée à la surface périphérique interne de l'arbre rotatif creux (26), et à une surface périphérique interne de la roue solaire (41) par l'intermédiaire d'un espace radial.

2. Actionneur électrique (1) selon la revendication 1, dans lequel la surface périphérique interne de la partie cylindrique (43a) est fixée à la surface périphérique externe (32b) de l'élément d'écrou (32) par ajustement par pression.

3. Actionneur électrique (1) selon la revendication 1 ou 2, dans lequel la surface de chemin de roulement interne (27a) est agencée dans une largeur axiale de l'élément d'écrou (32).

4. Actionneur électrique (1) selon l'une quelconque des revendications 1 à 3,
dans lequel un palier de butée (47) est agencé de manière adjacente à l'élément d'écrou (32) sur l'autre côté dans la direction axiale, et
dans lequel le palier de butée (47) est agencé dans une plage dans la direction axiale entre les deux paliers à roulement (27, 30).

5. Actionneur électrique (1) selon l'une quelconque des revendications 1 à 4, dans lequel l'élément d'écrou (32) est ajusté à une périphérie externe de l'arbre de vis (33) par l'intermédiaire d'une pluralité de billes (34).

6. Actionneur électrique (1) selon l'une quelconque des revendications 1 à 5, comprenant en outre :
un boîtier (2), qui comprend une pluralité d'éléments (20, 29, 50) qui sont couplés les uns aux autres dans la direction axiale, et est configuré pour loger la partie de moteur (A) et la partie de mécanisme de conversion de mouvement (B) ; et
une partie terminale (D) qui est configurée pour maintenir un circuit d'alimentation électrique, le circuit d'alimentation électrique étant configuré pour fournir la puissance à la partie de moteur (A),
dans lequel la partie terminale (D) est prise en tenaille par les éléments (20, 29) formant le boîtier (2) des deux côtés dans la direction axiale.

7. Actionneur électrique (1) selon la revendication 6, dans lequel la partie terminale (D) a, dans une partie périphérique externe de celle-ci, une partie d'ouverture (50c) pour permettre à un fil conducteur connecté au circuit d'alimentation électrique d'être tiré vers un côté radialement externe du boîtier (2).
